(19) Europäisches Patentamt
European Patent Office
Office européen des brevets

(11) **EP 3 595 131 A1**

(12) **EUROPEAN PATENT APPLICATION**
published in accordance with Art. 153(4) EPC

(43) Date of publication:
**15.01.2020 Bulletin 2020/03**

(51) Int Cl.:
*H02J 50/70* (2016.01)       *H02J 50/12* (2016.01)

(21) Application number: **17900069.0**

(22) Date of filing: **10.03.2017**

(86) International application number:
**PCT/JP2017/009733**

(87) International publication number:
**WO 2018/163408 (13.09.2018 Gazette 2018/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Mitsubishi Electric Engineering Company, Limited**
**Chiyoda-ku**
**Tokyo 102-0073 (JP)**

(72) Inventors:
• **AKUZAWA, Yoshiyuki**
**Tokyo 102-0073 (JP)**
• **MATSUMORI, Hiroshi**
**Tokyo 102-0073 (JP)**

(74) Representative: **Hoffmann Eitle**
**Patent- und Rechtsanwälte PartmbB**
**Arabellastraße 30**
**81925 München (DE)**

(54) **RESONANCE-TYPE POWER TRANSMISSION DEVICE AND RESONANCE-TYPE POWER TRANSFER SYSTEM**

(57)     An inverter circuit (7) including a resonance circuit including an inductor and a capacitor and outputting power; and a transmitting antenna (2) transferring the power output by the inverter circuit are provided. The inverter circuit varies at least one of inductance of the inductor and capacitance of the capacitor in accordance with input impedance of the transmitting antenna.

FIG. 1

**Description**

**TECHNICAL FIELD**

The present invention relates to a resonance-type power transmission device and a resonance-type power transfer system for transferring radio frequency power.

**BACKGROUND ART**

In conventional resonance-type power transfer systems, a transmitting antenna and a receiving antenna are each covered with a magnetic shield member (see Patent Literature 1, for example) in order to suppress interfering waves due to radiation of a leakage electromagnetic field and decrease in power transmission efficiency.

**CITATION LIST**

**PATENT LITERATURE**

Patent Literature 1: JP 2012-248747 A

**SUMMARY OF INVENTION**

**TECHNICAL PROBLEM**

In the conventional configuration, radiation of a leakage electromagnetic field is suppressed using magnetic shield members. In such a configuration, the magnetic shield members need to cover the entire antennas while ensuring a gap with the antennas so as not to block a magnetic field between the transmitting antenna and the receiving antenna. Hence, there is a problem that a transmission device and a reception device cannot be made compact due to the structure.
Further, in the conventional configuration, though radiation of a leakage electromagnetic field generated from the transmitting and receiving antennas is suppressed, generation of a leakage electromagnetic field is not suppressed. In addition, the magnetic shield members cannot be provided in a gap between the transmitting antenna and the receiving antenna. Hence, there is a problem that a leakage electromagnetic field is radiated from this gap portion. The leakage electromagnetic field is higher harmonics of the fundamental wave for power transfer, and also acts as interfering waves over a wide band up to about 1 GHz, and adversely affects the communication frequency band of radios, radio transceivers, mobile phones, or the like.
The present invention is made to solve the above problems, and an object of the invention is to provide a resonance-type power transmission device capable of suppressing generation of interfering waves without using magnetic shield members.

**SOLUTION TO PROBLEM**

A resonance-type power transmission device according to the present invention includes: an inverter circuit comprising a resonance circuit comprising an inductor and a capacitor and outputting power; and a transmitting antenna transferring the power output by the inverter circuit. The inverter circuit varies at least one of inductance of the inductor and capacitance of the capacitor in accordance with input impedance of the transmitting antenna.

**ADVANTAGEOUS EFFECTS OF INVENTION**

According to the present invention, as configured in the above-described manner, generation of interfering waves can be suppressed without using magnetic shield members.

**BRIEF DESCRIPTION OF DRAWINGS**

FIG. 1 is a diagram showing an exemplary configuration of a resonance-type power transfer system according to a first embodiment of the present invention.
FIG. 2 is an equivalent circuit diagram of an inverter circuit according to the first embodiment of the present invention.
FIGS. 3A and 3B are graphs for explaining exemplary operation of an inverter circuit according to the first embodiment of the present invention, FIG. 3A is a graph illustrating exemplary changes in a switching voltage Vds, and FIG. 3B is a graph illustrating exemplary changes in an output voltage Vo.

FIG. 4 is a diagram showing an exemplary configuration of a resonance-type power transfer system according to a second embodiment of the present invention.

FIGS. 5A to 5C are graphs for explaining exemplary operation of an interface power supply in the second embodiment of the present invention, FIG. 5A is a graph illustrating exemplary changes in a switching voltage Vds, FIG. 5B is a graph illustrating exemplary changes in an output voltage Vo, and FIG. 5C is a graph illustrating exemplary control of an input voltage $V_I$.

## DESCRIPTION OF EMBODIMENTS

Hereinafter, some embodiments of the present invention will be described in detail with reference to the accompanying drawings.

First Embodiment

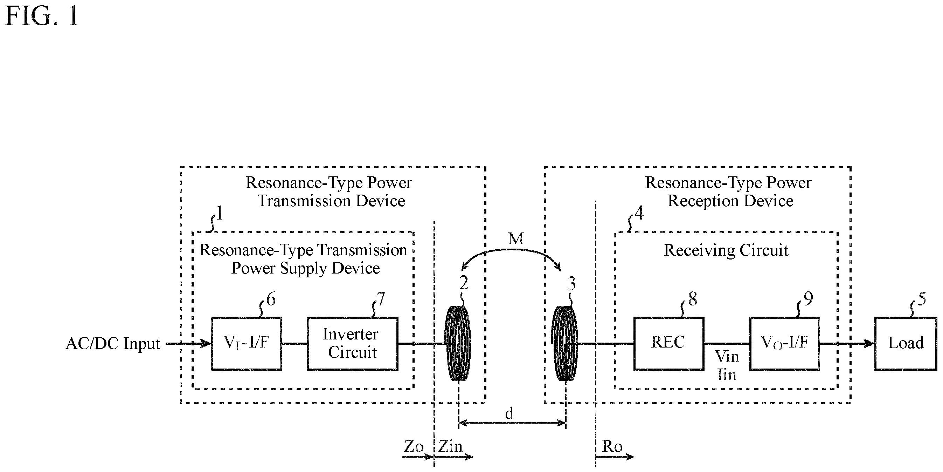

FIG. 1 is a diagram showing an exemplary configuration of a resonance-type power transfer system according to a first embodiment of the invention.

The resonance-type power transfer system includes, as shown in FIG. 1, a resonance-type transmission power supply device 1, a transmitting antenna (TX-ANT) 2, a receiving antenna (RX-ANT) 3, a receiving circuit 4, and a load 5. The resonance-type transmission power supply device 1 includes an interface power supply ($V_I$- I/F) 6 and an inverter circuit 7. The receiving circuit 4 includes a rectifier circuit (REC) 8 and an interface power supply ($V_O$ - I/F) 9. The resonance-type transmission power supply device 1 and the transmitting antenna 2 form a resonance-type power transmission device, and the receiving antenna 3 and the receiving circuit 4 form a resonance-type power reception device.

The interface power supply 6 has a function of a converter that increases or decreases a voltage inputted to the resonance-type transmission power supply device 1 and outputs DC power. The interface power supply 6 has a function of a DC/DC converter when DC power is inputted to the resonance-type transmission power supply device 1, and has a function of an AC/DC converter when AC power is inputted to the resonance-type transmission power supply device 1. The power obtained by the interface power supply 6 is outputted to the inverter circuit 7.

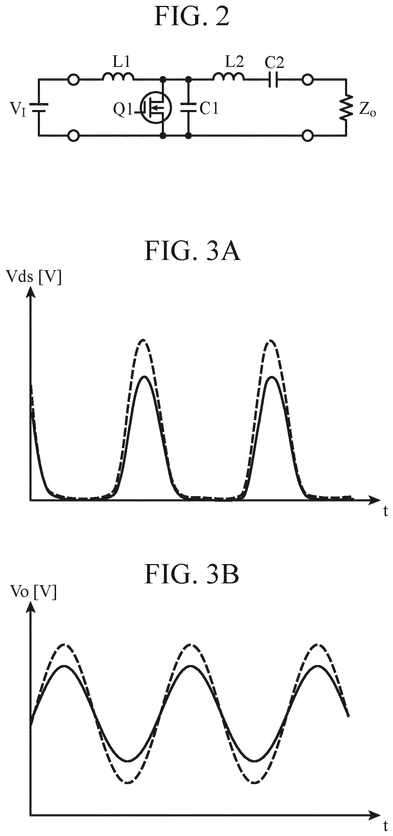

The inverter circuit 7 converts the power outputted from the interface power supply 6 into radio frequency power having the same ("the same" includes the meaning of "substantially the same") frequency as the resonance frequency of the transmitting antenna 2, and outputs the radio frequency power. This inverter circuit 7 is a class E inverter circuit having a resonance circuit including an inductor L2 and a capacitor C2 as illustrated in FIG. 2.

The inverter circuit 7 has a function of controlling an output impedance Zo of the inverter circuit 7 (resonance-type transmission power supply device 1) in accordance with an input impedance Zin of the transmitting antenna 2. More specifically, the inverter circuit 7 varies at least one of the inductance of the inductor L2 and the capacitance of the capacitor C2 in accordance with the input impedance Zin. In this example, in the case where the inverter circuit 7 varies the inductance of the inductor L2, the inverter circuit 7 controls the inductance to a value proportional to the input impedance Zin. In the case where the inverter circuit 7 varies the capacitance of the capacitor C2, the inverter circuit 7 controls the capacitance to a value inversely proportional to the input impedance Zin. In addition, the inverter circuit 7 indirectly detects a change in the input impedance Zin by detecting a change in its own (the inverter circuit 7's) operation state.

The transmitting antenna 2 resonates at the same ("the same" includes the meaning of "substantially the same") frequency as the frequency of the radio frequency power outputted from the inverter circuit 7, and thereby performs power transfer.

The receiving antenna 3 resonates at the same ("the same" includes the meaning of "substantially the same") frequency as the resonance frequency of the transmitting antenna 2, and thereby receives the radio frequency power transferred from the transmitting antenna 2. The radio frequency power (AC power) received by the receiving antenna 3 is outputted to the rectifier circuit 8.

Note that the power transfer type between the transmitting antenna 2 and the receiving antenna 3 is not particularly limited, and any of a magnetic field resonance-type, an electric field resonance-type, and an electromagnetic induction-type may be used. In addition, the transmitting antenna 2 and the receiving antenna 3 are not limited to contactless antennas such as those shown in FIG. 1.

The rectifier circuit 8 converts the AC power outputted from the receiving antenna 3 into DC power. The DC power obtained by the rectifier circuit 8 is outputted to the interface power supply 9.

The interface power supply 9 has a function as a DC/DC converter that increases or decreases the DC voltage outputted from the rectifier circuit 8. The DC power obtained by the interface power supply 9 is outputted to the load 5.

The load 5 is a circuit or a device that functions by the DC power outputted from the interface power supply 9.

Next, functions of the inverter circuit 7 in the first embodiment will be described.

In the following explanation, the output impedance of the inverter circuit 7 is represented as Zo. The input impedance of the transmitting antenna 2 is represented as Zin. The input impedance of the rectifier circuit 8 is represented as Ro. The inductance of the transmitting antenna 2 is represented as $L_{TX}$. The inductance of the receiving antenna 3 is represented as $L_{RX}$. The mutual inductance of the transmitting antenna 2 and the receiving antenna 3 is represented as M. The distance between the transmitting antenna 2 and the receiving antenna 3 is represented as d. The input voltage of the interface power supply 9 is represented as Vin. The input current of the interface power supply 9 is represented as Iin. The resistance (load resistance) of the load 5 is represented as RL.

Here, the input impedance Zin of the transmitting antenna 2 is represented by the following equation (1). In equation (1), $\omega = 2\pi f$, and f is the transfer frequency.

$$Zin = (\omega M)^2/Ro \qquad (1)$$

The input impedance Ro of the rectifier circuit 8 is represented by the following equation (2). In equation (2), it is assumed that there is almost no loss in the rectifier circuit 8.

$$Ro \approx Vin/Iin \qquad (2)$$

From equations (1) and (2), the input impedance Zin of the transmitting antenna 2 is given by the following equation (3).

$$Zin \approx (\omega M)^2/(Vin/Iin) \qquad (3)$$

When the load resistance RL changes, Vin/Iin changes proportionally to the load resistance RL. Therefore, the input impedance $Zin \approx (\omega M)^2/(Vin/Iin)$ of the transmitting antenna 2 changes in inverse proportion to the load resistance RL.

Furthermore, the output impedance Zo of the inverter circuit 7 illustrated in FIG. 2 is represented by the following equation (4). In equation (4), $\omega = 2\pi f$, and f represents a switching frequency (= transfer frequency). $Q_L$ represents the Q factor in the resonance circuit (L2, C2, Zo). The symbol a denotes a coefficient in switching conditions under which zero voltage switching (ZVS) is established.

$$Zo = \omega L2/Q_L = 1/(\omega C2(Q_L - a)) \qquad (4)$$

Equation (4) shows that the output impedance Zo of the inverter circuit 7 changes in proportion to the inductance of the inductor L2. Further, the output impedance Zo of the inverter circuit 7 changes in inverse proportion to the capacitance of the capacitor C2.

Therefore, the inverter circuit 7 controls the output impedance Zo by controlling at least one of the inductance of the inductor L2 and the capacitance of the capacitor C2 in accordance with the input impedance Zin of the transmitting antenna 2. In the case where the inverter circuit 7 varies the inductance of the inductor L2, the inverter circuit 7 controls the inductance to a value proportional to the input impedance Zin. In the case where the inverter circuit 7 varies the capacitance of the capacitor C2, the inverter circuit 7 controls the capacitance to a value inversely proportional to the input impedance Zin.

Note that the inverter circuit 7 cannot directly detect the input impedance Zin of the transmitting antenna 2. Meanwhile, a mismatch between the output impedance Zo of the inverter circuit 7 and the input impedance Zin of the transmitting antenna 2 causes a change in the operation state of the inverter circuit 7. For example as illustrated in FIG. 3, a switching voltage (the drain-source voltage of a switching element Q1) Vds and an output voltage Vo change. In FIG. 3, solid lines represent a case of $Zo \approx Zin$ (impedance matching), and broken lines represent a case of $Zo \neq Zin$ (impedance mismatch).

Therefore, the inverter circuit 7 indirectly detects a change in the input impedance Zin of the transmitting antenna 2 by detecting a change in the operation state of the inverter circuit 7 itself. Then, the inverter circuit 7 controls at least one of the inductance of the inductor L2 and the capacitance of the capacitor C2 such that the state of impedance mismatch shifts to the state of impedance matching.

As a result, the relation of $Zo \approx Zin$ can be maintained, and impedance matching is achieved between the resonance-type power transmission device and the resonance-type power reception device, thereby suppressing generation of interfering waves.

As described above, in the first embodiment, since the inverter circuit 7 controlling the output impedance Zo by varying at least one of the inductance of the inductor L2 and the capacitance of the capacitor C2 in accordance with the input impedance Zin of the transmitting antenna 2 is provided, interfering waves can be suppressed without using magnetic shield members.

Specifically, in the resonance-type power transfer system, interfering waves are generated due to higher harmonics from the resonance-type transmission power supply device 1.

For such a case, by controlling the output impedance Zo in accordance with the input impedance Zin in the inverter circuit 7, higher harmonics from the resonance-type transmission power supply device 1 can be suppressed, thereby suppressing generation of interfering waves.

In the resonance-type power transfer system, interfering waves are also generated due to a mismatch of input/output impedance between circuits included in the resonance-type power transmission device and the resonance-type power reception device.

Therefore, by controlling the output impedance Zo in accordance with the input impedance Zin by the inverter circuit 7, a mismatch of input/output impedance between the circuits can be eliminated, and thus generation of interfering waves can be suppressed.

In the resonance-type power transfer system, interfering waves are also generated by resonance due to parasitic impedance in the circuits included in the resonance-type power transmission device and the resonance-type power reception device.

For such a case, by controlling the output impedance Zo in accordance with the input impedance Zin by the inverter circuit 7, the mismatch of input/output impedance between the circuits can be eliminated, so that the levels of higher harmonics entering each of the circuits can be suppressed as much as possible. As a result, even when there is parasitic impedance in the circuits, occurrence of the resonance phenomenon which unintentionally amplifies the higher harmonics is reduced. Consequently, generation of interfering waves can be suppressed.

In the resonance-type power transfer system, when positional displacement occurs between the transmitting and receiving antennas 2 and 3 due to a change in the position of the resonance-type power reception device, an impedance mismatch occurs between the resonance-type power transmission device and the resonance-type power reception device, and thus, interfering waves are generated.

For such a case, when the positions of the transmission and receiving antennas 2 and 3 are displaced to each other, the mutual inductance M changes, and the input impedance Zin also changes on the basis of equation (3). Then, the inverter circuit 7 controls the output impedance Zo in accordance with the input impedance Zin. Therefore, even when the position of the resonance-type power reception device changes so that the positions of the transmission and receiving antennas 2 and 3 are displaced to each other, impedance matching between the resonance-type power transmission device and the resonance-type power reception device can be maintained, and generation of interfering waves can be suppressed.

Note that by controlling the output impedance Zo by the inverter circuit 7, the input voltage Vin can be changed, so that the input impedance Zin can be changed. This is because changing the output impedance Zo in the inverter circuit 7 results in a change in the amplitudes of the input voltage and the input current of the transmitting antenna 2, which accordingly results in a change in the amplitudes of the input voltage and the input current of the receiving antenna 3.

Further, in the resonance-type power transfer system, when the load resistance RL changes, since a mismatch of impedance between the resonance-type power transmission device and the resonance-type power reception device occurs, interfering waves are generated.

For such a case, when the load resistance RL changes, the input impedance Zin also changes. Then, the inverter circuit 7 controls the output impedance Zo in accordance with the input impedance Zin. Therefore, even when the load resistance RL changes, impedance matching between the resonance-type power transmission device and the resonance-type power reception device can be maintained, so that generation of interfering waves can be suppressed.

Moreover, in the resonance-type power reception device according to the first embodiment, generation of interfering waves is suppressed by circuit design. Hence, a system having high power transfer efficiency with small power loss can be formed. In addition, since a devices can be formed without using magnetic shield members, a reduction in cost, downsizing, and a reduction in weight can be achieved.

Second Embodiment

In the first embodiment, the case has been described in which the inverter circuit 7 controls the output impedance Zo by varying at least one of the inductance of the inductor L2 and the capacitance of the capacitor C2 in accordance with the input impedance Zin of the transmitting antenna 2. In a second embodiment, the case in which an interface power supply 6b controls output impedance Zo by controlling an input voltage $V_I$ of an inverter circuit 7b in accordance with input impedance Zin of a transmitting antenna 2 is described.

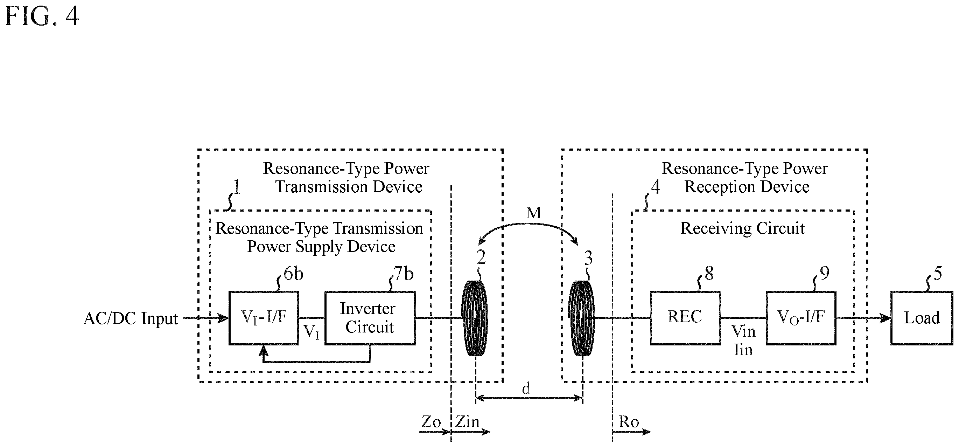

FIG. 4 is a diagram illustrating a configuration example of a resonance-type power transfer system according to the second embodiment of the present invention. In the resonance-type power transfer system according to the second embodiment illustrated in FIG. 4, the interface power supply 6 and the inverter circuit 7 of the resonance-type power transfer system according to the first embodiment illustrated in FIG. 1 are replaced by the interface power supply 6b and the inverter circuit 7b, respectively. Other components are the same as those of the first embodiment, and thus are denoted by the same symbols, and description thereof is omitted.

The interface power supply 6b has a function as a converter that increases or decreases the voltage input to a resonance-type transmission power supply device 1 and outputs it as a direct current. The interface power supply 6b has a function as a DC/DC converter when DC power is inputted to the resonance-type transmission power supply device 1, and has a function as an AC/DC converter when AC power is inputted to the resonance-type transmission power supply device 1. The power obtained by the interface power supply 6b is outputted to the inverter circuit 7b.

The interface power supply 6b also has a function of controlling the output impedance Zo of the inverter circuit 7b (resonance-type transmission power supply device 1) in accordance with the input impedance Zin of the transmitting antenna 2. More specifically, the interface power supply 6b controls the input voltage $V_I$ of the inverter circuit 7b to a value proportional to the square root of the input impedance Zin. Further, the interface power supply 6b indirectly detects a change in the input impedance Zin from a change in an operation state detected by the inverter circuit 7b.

The inverter circuit 7b converts the power outputted from the interface power supply 6b into radio frequency power having the same frequency ("the same" includes the meaning of "substantially the same") as the resonance frequency of the transmitting antenna 2 and outputs the radio frequency power. This inverter circuit 7b is a class E inverter circuit having a resonance circuit including an inductor L2 and a capacitor C2 as illustrated in FIG. 2.

In addition, the inverter circuit 7b also has a function of detecting a change in its own (the inverter circuit 7b's) operation state and notifying the interface power supply 6b of the change.

Next, the function of the interface power supply 6b in the second embodiment will be described.

In this explanation, the input voltage of the inverter circuit 7b is represented as $V_I$ and the output power of the inverter circuit 7b is represented as Po.

In this case, the output impedance Zo of the inverter circuit 7b is represented by the following equation (5). Equation (5) shows that the output impedance Zo of the inverter circuit 7b changes in proportion to $V_I^2$.

$$Zo = 8V_I^2/((\pi^2 + 4)Po) \qquad (5)$$

In addition, when a relation of the load resistance RL = (Vin/Iin) is used, the following equation (6) holds.

$$Zo = Zin = (\omega M)^2/RL = 8V_I^2/((\pi^2 + 4)Po) \qquad (6)$$

Then, the interface power supply 6b controls the input voltage $V_I$ of the inverter circuit 7b to a value proportional to the square root of the input impedance Zin.

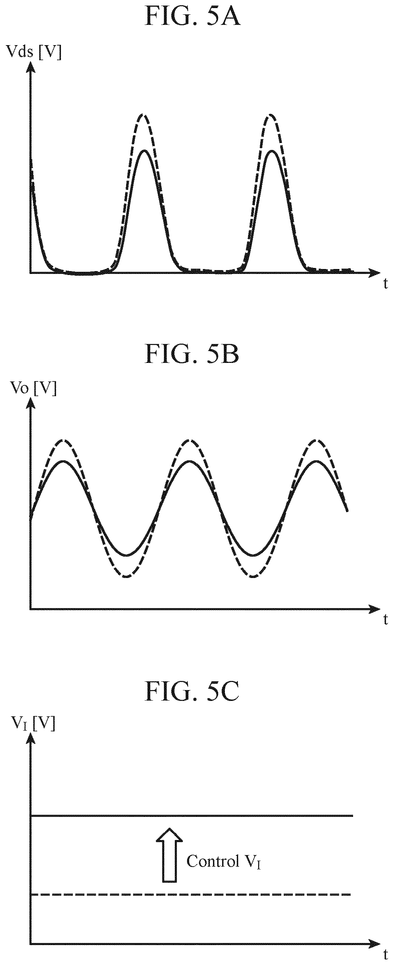

Note that the interface power supply 6b and the inverter circuit 7b cannot directly detect the input impedance Zin of the transmitting antenna 2. On the other hand, a mismatch between the output impedance Zo of the inverter circuit 7b and the input impedance Zin of the transmitting antenna 2 causes a change in the operation state of the inverter circuit 7b. For example as illustrated in FIGS. 5A and 5B, the switching voltage Vds and the output voltage Vo change. In FIG. 5, solid lines represent the case of Zo ≈ Zin (impedance matching), and broken lines represent the case of Zo ≠ Zin (impedance mismatch).

Therefore, the inverter circuit 7b detects a change in its own operation state and notifies the interface power supply 6b of the change. Then the interface power supply 6b indirectly detects a change in the input impedance Zin of the transmitting antenna 2 from the change in the operation state. Then, as illustrated in FIG. 5C, the interface power supply 6b controls the input voltage $V_I$ of the inverter circuit 7b to a value proportional to the square root of the input impedance Zin such that the state of impedance mismatch shifts to the state of impedance matching.

As a result, the relation of Zo ≈ Zin can be maintained, and impedance matching is achieved between the resonance-type power transmission device and the resonance-type power reception device, thereby suppressing generation of interfering waves.

As described above, according to the second embodiment, similar effects to those of the first embodiment can also be obtained by including the interface power supply 6b controlling the output impedance Zo by controlling the input voltage $V_I$ of the inverter circuit 7b in accordance with the input impedance Zin of the transmitting antenna 2.

Note that in the above description, the case has been described in which the inverter circuit 7b detects a change in its own operation state and the interface power supply 6b indirectly detects a change in the input impedance Zin of the transmitting antenna 2 from that change in the operation state. However, the method of indirectly detecting a change in the input impedance Zin is not limited to the above.

For example, a mismatch between the output impedance Zo of the inverter circuit 7b and the input impedance Zin of the transmitting antenna 2 causes a change in the operation state of an interface power supply (second interface power supply) 9. Specifically, the input voltage Vin of the interface power supply 9 changes. Thus, instead of the inverter circuit 7b, the interface power supply 9 may detect a change in its own (the interface power supply 9's) operation state, and the interface power supply 6b may indirectly detect a change in the input impedance Zin of the transmitting antenna 2 from the change in that operation state.

Note that, in this method, the interface power supply 6b is capable of easily detecting a change in the mutual inductance M.

Note that, within the scope of the present invention, the present invention can include a flexible combination of the respective embodiments, a modification of any component of the respective embodiments, or omission of any component in the respective embodiments.

## INDUSTRIAL APPLICABILITY

A resonance-type power transmission device according to the present invention is capable of suppressing generation of interfering waves without using magnetic shield members and is suitable for use in a resonance-type power transmission device or the like that transfers radio frequency power.

## REFERENCE SIGNS LIST

| 1 | Resonance-type transmission power supply device |
|---|---|
| 2 | Transmitting antenna (TX-ANT) |
| 3 | Receiving antenna (RX-ANT) |
| 4 | Receiving circuit |
| 5 | Load |
| 6, 6b | Interface power supply ($V_I$-I/F) |
| 7, 7b | Inverter circuit |
| 8 | Rectifier circuit (REC) |
| 9 | Interface power supply ($V_O$-I/F). |

## Claims

1. A resonance-type power transmission device comprising:

   an inverter circuit comprising a resonance circuit comprising an inductor and a capacitor and outputting power; and
   a transmitting antenna transferring the power output by the inverter circuit,
   wherein the inverter circuit varies at least one of inductance of the inductor and capacitance of the capacitor in accordance with input impedance of the transmitting antenna.

2. The resonance-type power transmission device according to claim 1, wherein the inverter circuit controls the inductance of the inductor to a value proportional to the input impedance of the transmitting antenna.

3. The resonance-type power transmission device according to claim 1, wherein the inverter circuit controls the capacitance of the capacitor to a value inversely proportional to the input impedance of the transmitting antenna.

4. The resonance-type power transmission device according to claim 1, wherein the inverter circuit indirectly detects a change in the input impedance of the transmitting antenna on a basis of a change in an operation state of the inverter circuit.

5. The resonance-type power transmission device according to claim 1, wherein the transmitting antenna performs power transfer by magnetic field resonance, electric field resonance, or electromagnetic induction.

6. A resonance-type power transmission device comprising:

   an inverter circuit outputting power;
   a transmitting antenna transferring the power output by the inverter circuit; and
   an interface power supply controlling an input voltage of the inverter circuit in accordance with input impedance of the transmitting antenna.

7. The resonance-type power transmission device according to claim 6, wherein the interface power supply controls the input voltage of the inverter circuit to a value proportional to a square root of the input impedance of the transmitting antenna.

8. The resonance-type power transmission device according to claim 6, wherein the inverter circuit detects a change in an operation state of the inverter circuit, and
   the interface power supply indirectly detects a change in the input impedance of the transmitting antenna on a basis of the change in the operation state detected by the inverter circuit.

9. The resonance-type power transmission device according to claim 6, wherein the transmitting antenna performs power transfer by magnetic field resonance, electric field resonance, or electromagnetic induction.

10. A resonance-type power transfer system comprising:

    an inverter circuit outputting power;
    a transmitting antenna transferring the power output by the inverter circuit; and
    an interface power supply controlling an input voltage of the inverter circuit in accordance with input impedance of the transmitting antenna.

11. The resonance-type power transfer system according to claim 10, further comprising:

    a receiving antenna receiving the power transferred by the transmitting antenna;
    a rectifier circuit converting the power received by the receiving antenna into direct-current power; and
    a second interface power supply increasing or decreasing a direct-current voltage obtained from the rectifier circuit,
    wherein the second interface power supply detects a change in an operation state of the second interface power supply, and
    the interface power supply indirectly detects a change in the input impedance of the transmitting antenna from the change in the operation state detected by the second interface power supply.

FIG. 1

## FIG. 2

## FIG. 3A

## FIG. 3B

FIG. 4

# FIG. 5A

Vds [V]

# FIG. 5B

Vo [V]

# FIG. 5C

$V_I$ [V]

Control $V_I$

## INTERNATIONAL SEARCH REPORT

| International application No. |
|---|
| PCT/JP2017/009733 |

**A. CLASSIFICATION OF SUBJECT MATTER**
*H02J50/70(2016.01)i, H02J50/12(2016.01)i*

According to International Patent Classification (IPC) or to both national classification and IPC

**B. FIELDS SEARCHED**

Minimum documentation searched (classification system followed by classification symbols)
H02J50/70, H02J50/12

Documentation searched other than minimum documentation to the extent that such documents are included in the fields searched
Jitsuyo Shinan Koho             1922–1996   Jitsuyo Shinan Toroku Koho   1996–2017
Kokai Jitsuyo Shinan Koho   1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 5989285 B1 (Mitsubishi Electric Engineering Co., Ltd.),<br>07 September 2016 (07.09.2016),<br>paragraphs [0011] to [0018], [0030], [0053];<br>fig. 1 to 2<br>(Family: none) | 1,5<br>2-4,8-9<br>7 |
| Y | JP 5832702 B1 (Mitsubishi Electric Engineering Co., Ltd.),<br>16 December 2015 (16.12.2015),<br>paragraphs [0002] to [0005]; fig. 8<br>(Family: none) | 2-3,6,8-11 |
| Y | WO 2016/136566 A1 (Murata Mfg. Co., Ltd.),<br>01 September 2016 (01.09.2016),<br>paragraphs [0045] to [0049]; fig. 1 to 2<br>(Family: none) | 4,6,8-11 |

[X] Further documents are listed in the continuation of Box C.          [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 April 2017 (11.04.17) | 25 April 2017 (25.04.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**INTERNATIONAL SEARCH REPORT**

| International application No. |
| --- |
| PCT/JP2017/009733 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2013-5614 A  (Toyota Motor Corp.), 07 January 2013 (07.01.2013), paragraphs [0029], [0036], [0054]; fig. 2 & US 2014/0125144 A1 paragraphs [0043], [0050], [0068]; fig. 2 & WO 2012/172410 A1     & EP 2721719 A1 & CN 103650289 A | 11 |
| A | JP 5738497 B1  (Mitsubishi Electric Engineering Co., Ltd.), 24 June 2015 (24.06.2015), paragraphs [0010] to [0014]; fig. 1 to 2 (Family: none) | 1-11 |
| A | JP 2012-135117 A  (Panasonic Corp.), 12 July 2012 (12.07.2012), paragraphs [0044] to [0045]; fig. 1 (Family: none) | 1-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012248747 A